# EUROPÄISCHE PATENTSCHRIFT

(11) **EP 2 433 853 B1**
(45) Veröffentlichungstag und Bekanntmachung des Hinweises auf die Patenterteilung: **09.08.2017**
(21) Anmeldenummer: 11172046.2
(22) Anmeldetag: 30.06.2011
(51) Int. Cl.: B62D 55/14, B62D 55/24

(54) **Landwirtschaftliche Maschine und Raupenlaufwerk dafür**
Agricultural machine and track assembly for same
Machine agricole et chenilles pour celle-ci

(30) Priorität: 22.09.2010 DE 102010046043
(43) Veröffentlichungstag der Anmeldung: 28.03.2012
(73) Patentinhaber: CLAAS Selbstfahrende Erntemaschinen GmbH, 33428 Harsewinkel (DE)
(72) Erfinder: Behra, Jan Philipp, 33332 Gütersloh (DE)

(56) Entgegenhaltungen:
- DD-A1- 220 890
- DE-B- 1 111 974
- GB-A- 469 722
- GB-A- 584 226
- US-A1- 2009 085 398

## Beschreibung

Die vorliegende Erfindung betrifft allgemein ein Raupenlaufwerk und insbesondere eine landwirtschaftliche Maschine, die mit einem Raupenlaufwerk ausgestattet ist.

Eine landwirtschaftliche Maschine mit einem Raupenlaufwerk nach dem Oberbegriff des Anspruchs 1 ist unter anderem aus EP 1 840 018 B1 bekannt.

Raupenlaufwerke sind für den Einsatz an landwirtschaftlichen Maschinen interessant, da sie es erlauben, das Gewicht der Maschine auf eine große Fläche zu verteilen und so einer Verdichtung des von der Maschine befahrenen Bodens entgegenzuwirken. Ein erheblicher Nachteil herkömmlicher Raupenlaufwerke ist ihre hohe Verschleißanfälligkeit. Die damit verbundenen hohen Betriebskosten machen ihren Einsatz in vielen Fällen kurzfristig unwirtschaftlich, wo er langfristig zur Schonung des Bodens durchaus angezeigt wäre.

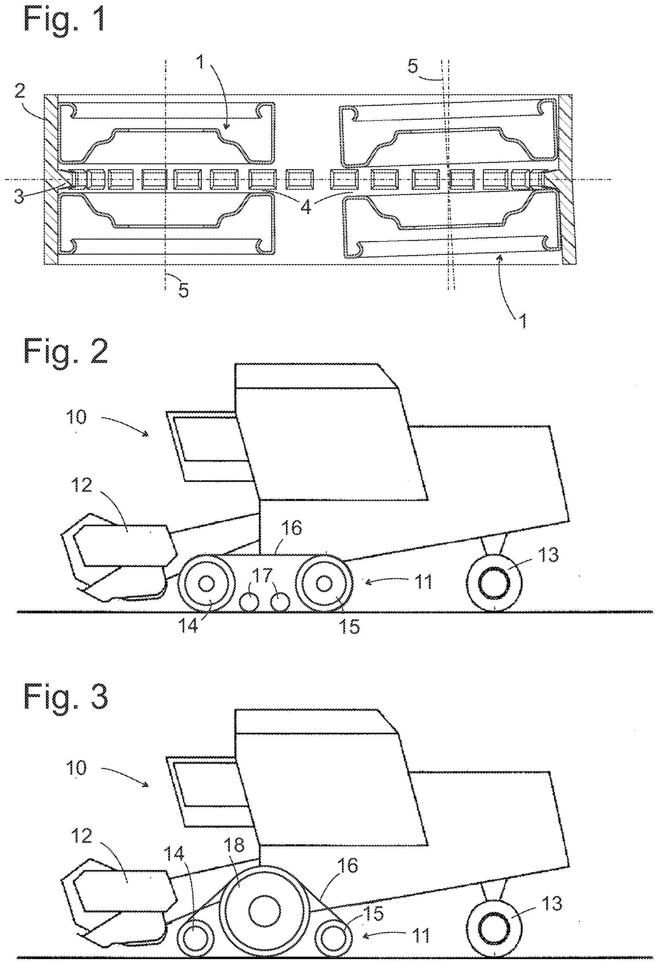

Fig. 1 ist ein schematischer Schnitt durch ein herkömmliches Raupenlaufwerk, der die Gründe für den hohen Verschleiß veranschaulicht. Ein typisches herkömmliches Raupenlaufwerk umfasst wenigstens zwei Räder 1 von im Wesentlichen zylindrischer Form, die von einem straff gespannten Raupenband 2 umschlungen sind. Um sicherzustellen, dass das Raupenband 2 nicht in seitlicher bzw. axialer Richtung von den Rädern 1 abgleiten kann, trägt es an seiner Innenseite eine Vielzahl von Führungsblöcken 3, die in umlaufende Nuten 4 der Räder 1 eingreifen. Im Idealfall sollten die Achsen 5 der Räder 1 exakt parallel zueinander ausgerichtet sein. In der Praxis gelingt dies nie perfekt, wie in Fig. 1 stark übertrieben dargestellt. Die Folgen einer nicht perfekten Parallelität der Achsen 5 ist, dass die Spannung des Raupenbandes 2 auf verschiedenen Seiten seiner Führungsblöcke 3 unterschiedlich ist. In der Darstellung der Fig. 1 ist die Fehlstellung des rechten Rades 1 so stark, dass eine Hälfte des Raupenbandes 2 (die untere in der Darstellung der Fig. 1) elastisch gedehnt ist, während die entgegengesetzte Hälfte das rechte Rad 1 spielhaltig umschlingt. Zugspannungen treten daher im Wesentlichen nur in der unteren Hälfte des Raupenbandes 2 auf, mit der Folge, dass das Raupenband 2 dazu neigt, nach unten auszuweichen. Die dadurch noch weiter zunehmende Spannung des Raupenbandes 2 führt zu erhöhter Reibung zwischen seinen Innenflächen und den von ihm umschlungen Umfangsflächen der Räder 1. Darüber hinaus kann sie eine inelastische Streckung des Raupenbandes 2 zur Folge haben, was dazu führt, dass die Spannung des Raupenbandes 2 ständig nachjustiert werden muss und das Raupenband unbrauchbar wird, wenn der Verstellbereich der Justiermittel ausgeschöpft ist. Zwar kann eine allzu starke Seitwärtsabweichung des Raupenbandes 2 und die damit zusammenhängende Dehnung vermieden werden, indem die Führungsblöcke 3 an einem Rand der Nuten 4 anstoßen, doch sind dann die Führungsblöcke 3 einem starken einseitigen Reibverschleiß an den die Nuten 4 begrenzenden Flanken der Räder 1 ausgesetzt.

Aus DE 101 14 400 A1 ist ein Raupenlaufwerk bekannt, bei dem die Orientierung der Achse eines Rades justierbar ist. Ein solcher Justiermechanismus muss, um wirksam zu sein, extrem starr sein, und ist daher nur mit hohem Aufwand und Kosten realisierbar. Darüber hinaus verursacht die Justierung für den Betreiber einer mit einem solchen Raupenlaufwerk ausgestatteten Maschine regelmäßig Aufwand und Kosten, die die Wirtschaftlichkeit der Maschine beeinträchtigen.

Die DD 220 890 A1 offenbart eine Rollpaarung von einem Laufrad und einer Raupenschake bei Tagebaugroßgeräten, bei der die Querkrümmung des Laufrades so gestaltet ist, dass sie im Bereich der häufigen Überrollungen kleiner als im Bereich der weniger häufigen Überrollungen ist. Die Querkrümmung ist zweckmäßigerweise als Ellipsenbogenstück ausgebildet.

Aufgabe der Erfindung ist daher, ein Raupenlaufwerk zu schaffen, das inhärent, ohne die Notwendigkeit einer aufwändigen Justage, eine geringe Verschleißneigung aufweist.

Die Aufgabe wird gelöst, indem bei einem Raupenlaufwerk mit wenigstens zwei Laufrädern und einem endlosen Raupenband, das Wirkoberflächen der Laufräder umschlingt, wobei eine Innenseite des Raupenbandes zwei im Querschnitt ebene Streifen umfasst, die voneinander durch eine Reihe von nach innen vorspringenden Führungsblöcken getrennt sind, und wobei Radscheiben der Laufräder auf einer Radnabe in einem solchen Abstand voneinander montiert sind, dass zwischen Umfangsflächen von zwei Elementen jedes Laufrades eine Nut frei bleibt, in die die Führungsblöcke mit Spiel eingreifen, von den Wirkoberflächen der Laufräder wenigstens eine ballig ausgeführt ist.

Die ballige Form der Laufflächen führt dazu, dass die in dem Raupenband wirkende Spannung von der Mitte des Raupenbandes zu den Rändern hin abnimmt, wobei diese Spannungsverteilung auch durch Parallelitätsfehler der Laufräder nicht grundsätzlich beeinträchtigt wird. Es kann damit nicht zu extrem hohen Spannungen an den Rändern des Raupenbandes kommen, die das Raupenband in seitlicher Richtung ablenken.

Einer bevorzugten Ausgestaltung zufolge ist die ballige Oberfläche des wenigstens einen Laufrades im Querschnitt entlang einer Achse dieses Laufrades kreisbogenförmig.

Beim Durchfahren einer Kurve wirkt durch die Bodenreibung auf das Raupenband eines Raupenlaufwerks ein Drehmoment, das dazu neigt, das Raupenband am vorderen und am hinteren umschlungenen Laufrad in jeweils entgegengesetzte Richtungen auszulenken. Wenn die Balligkeit der Oberfläche zu stark ist, so führt eine solche Drehung des Raupenbandes zu einer Abnahme seiner Spannung, und es fehlt eine Kraft, die das Raupenband in seine Normalstellung zurücktreibt. Um dies zu vermeiden, entspricht der Durchmesser des Kreisbogens des axialen Querschnitts des Laufrades vorzugsweise wenigstens der Länge des Raupenlaufwerks.

Einer zweiten Ausgestaltung zufolge kann das ballige Laufrad wenigstens zwei Kegelstümpfe umfassen, deren große Grundflächen einander zugewandt sind.

Wenn die großen Grundflächen der zwei Kegelstümpfe einander unmittelbar berühren, kann die Spannung am Raupenband stark auf die Umgebung dieser Grundflächen konzentriert werden. Auf diese Weise ist eine sehr geringe Abhängigkeit der Spannungsverteilung im Raupenband von einem eventuellen Parallelitätsfehler der Radachsen erreichbar.

Andererseits kann eine starke Konzentration der Spannung im Bereich der sich berührenden großen Grundflächen wiederum zu einem erhöhten Reibverschleiß des Raupenbandes in diesem Bereich führen. Um dies zu vermeiden, kann es zweckmäßig sein, wenn das ballige Laufrad zwischen den zwei Kegelstümpfen einen zylindrischen Abschnitt aufweist, auf dem sich die Beanspruchung verteilt.

Um das Raupenband gegen seitliches Abgleiten von den Laufrädern zu sichern, umfassen die Laufräder und das Raupenband ineinander greifende Nuten und Federn.

Erfindungsgegenstand ist auch eine landwirtschaftliche Maschine, die wenigstens ein Raupenlaufwerk der oben beschriebenen Art aufweist. Das Raupenlaufwerk kann sowohl in einem Halbraupenfahrwerk als auch in einem Vollraupenfahrwerk zum Einsatz kommen.

Weitere Merkmale und Vorteile der Erfindung ergeben sich aus der nachfolgenden Beschreibung von Ausführungsbeispielen unter Bezugnahme auf die beigefügten Zeichnungen. Es zeigen:
- Fig. 1,: bereits behandelt, einen schematischen Schnitt durch ein herkömmliches Raupenlaufwerk;
- Fig. 2: eine Seitenansicht einer landwirtschaftlichen Maschine mit Raupenlaufwerk;
- Fig. 3: eine zweite Seitenansicht einer landwirtschaftlichen Maschine mit Raupenlaufwerk;
- Fig. 4: einen zu Fig. 1 analogen Schnitt durch das Raupenlaufwerk der Maschine aus Fig. 2;
- Fig. 5: einen zu Fig. 4 analogen Schnitt gemäß einer zweiten Ausgestaltung der Erfindung;
- Fig. 6: einen zu Fig. 4 analogen Schnitt gemäß einer dritten Ausgestaltung der Erfindung;
- Fig. 7: einen Schnitt durch das Raupenlaufwerk der dritten Ausgestaltung, der das Raupenband in einem ausgelenkten Zustand zeigt;
- Fig. 8: einen zu Fig. 4 analogen Schnitt gemäß einer vierten Ausgestaltung der Erfindung; und
- Fig. 9: einen zu Fig. 4 analogen Schnitt gemäß einer fünften Ausgestaltung der Erfindung.

Fig. 2 zeigt einen Mähdrescher 10 als Beispiel einer landwirtschaftlichen Maschine, an der die Erfindung anwendbar ist. Ein Fahrgestell des Mähdreschers 10 ist als Halbraupenfahrwerk ausgebildet, mit zwei Raupenlaufwerken 11, die das Gewicht des vorderen Teils der Karosserie des Mähdreschers 10 und eines Schneidvorsatzes 12 tragen, sowie einer Hinterachse mit gummibereiften Rädern 13, die das im Vergleich zum Vorderteil relativ leichte Heck des Mähdreschers 10 unterstützt.

Die beiden Raupenlaufwerke 11 umfassen jeweils ein vorderes und ein hinteres Laufrad 14 bzw. 15, von denen wenigstens eines angetrieben ist und die auf jeweils der Hälfte ihres Umfangs von einem endlosen Raupenband 16 umschlungen sind. Zwischen den Laufrädern 14, 15 in Bodennähe angeordnete Stützräder 17 halten einen unteren Strang des Raupenbandes 16 in durchgehendem Bodenkontakt und sorgen für eine gleichmäßige Gewichtsverteilung über die gesamte Kontaktfläche zwischen Boden und Raupenband 16.

Für den Fachmann ist auch ohne Zeichnung plausibel, dass die Raupenlaufwerke 11 auch in einem Vollraupenfahrwerk verwendbar sind, bzw. dass diese Raupenlaufwerke auch an anderen feldbefahrenden landwirtschaftlichen Maschinen wie etwa einem Schlepper, einem Feldhäcksler etc. vorgesehen sein können.

Fig. 3 zeigt in einer zu Fig. 2 analogen Ansicht einen Mähdrescher 10 mit einem anderen Typ von Raupenlaufwerk 11. Bei diesem auch als "Stocks-Raupe" bezeichneten Raupentyp ist ein zentrales Antriebsrad 18 größer als davor und dahinter angeordnete, auf etwas weniger als der Hälfte ihres Umfangs von dem Raupenband 16 umschlungene Laufräder 14, 15.

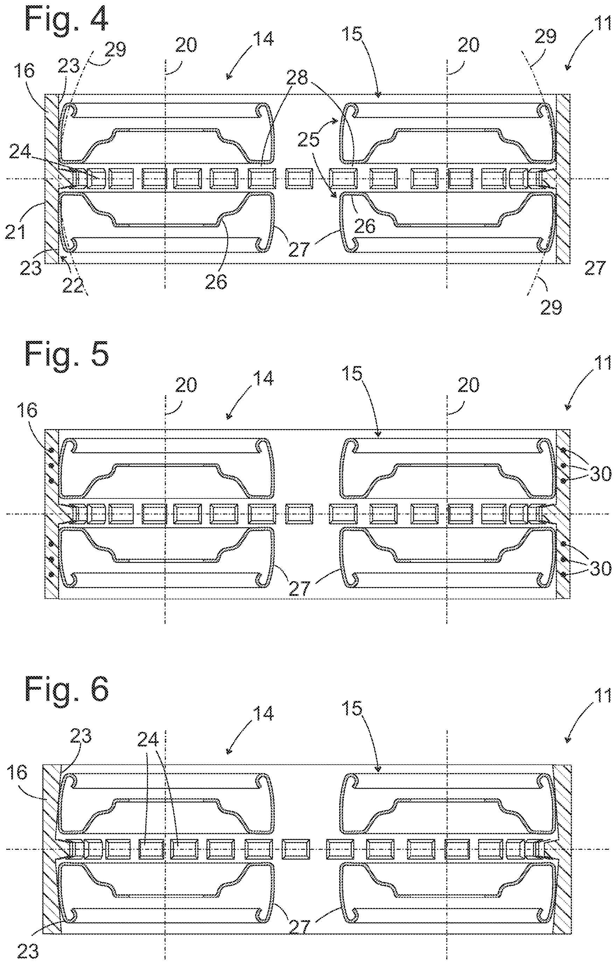

Fig. 4 zeigt einen Schnitt durch ein Raupenlaufwerk 11 entlang einer horizontalen, durch Drehachsen 20 der beiden Laufräder 14, 15 verlaufenden Ebene. Zwischen den Laufrädern 14, 15 angeordnete weitere Räder wie etwa die Stützräder 17 oder das Antriebsrad 18 sind in der Fig. nicht dargestellt, da sie für die Wirkung der Erfindung keine Bedeutung haben.

Das Raupenband 16 hat eine Außen- und eine Innenseite 21 bzw. 22. Die Außenseite 21 ist in Fig. 4 der Einfachheit halber eben dargestellt, doch versteht sich, dass die Außenseite 21 mit einem beliebigen geeigneten Profil zur Verbesserung der Kraftübertragung zwischen dem Raupenband 16 und dem befahrenen Boden versehen sein kann. Die Innenseite 22 umfasst zwei im Querschnitt ebene Streifen 23, die voneinander durch eine Reihe von nach innen vorspringenden Führungsblöcken 24 getrennt sind.

Die von dem Raupenband 16 umschlungenen Laufräder 14, 15 sind baugleich und bestehen jeweils aus zwei identischen, spiegelbildlich zueinander angeordneten Elementen 25, die jeweils eine sich im Wesentlichen in radialer Richtung in Bezug auf die Achsen 20 erstreckende Radscheibe 26 und eine in axialer Richtung ausgedehnte Umfangsfläche 27 aufweisen. Die Radscheiben 26 sind auf einer nicht dargestellten Radnabe in einem solchen Abstand voneinander montiert, dass zwischen den Umfangsflächen 27 der zwei Elemente 25 jedes Laufrades 14, 15 eine Nut 28 frei bleibt, in die die Führungsblöcke 24 mit Spiel eingreifen. Die Umfangsflächen 27 sind im axialen Schnitt kreisbogenförmig gekrümmt, wobei ihr Krümmungsradius größer ist als der eines in Fig. 4 mit 29 bezeichneten gedachten Kreises, dessen Durchmesser der Länge des Raupenlaufwerks 11 entspricht. Fig. 4 zeigt die Idealstellung des Raupenbandes 16 an den Laufrädern 14, 15. Die Führungsblöcke 24 greifen mittig in die Nuten 28 ein, ohne die Radscheiben 26 an deren beiden Seiten zu berühren, und die Umfangsflächen 27 berühren die Innenseite 22 des Raupenbandes 16 nur in unmittelbarer Nachbarschaft zur Nut 28.

Aufgrund der Krümmung der Umfangsflächen 27 in der Schnittebene der Fig. 4 hat ein Ausrichtungsfehler der Drehachse 20 eines der beiden Laufräder 14, 15 nur geringen Einfluss darauf, wo die Laufräder 14, 15 die Innenseite 22 des Raupenbandes 16 berühren. Selbst wenn der Orientierungsfehler so stark ist, dass eines der beiden Elemente 25 in der Schnittebene der Fig. 4 keinen Kontakt mit dem Raupenband 16 mehr hat, berühren sich das andere Element 25 desselben Laufrades und das Raupenband 16 weiterhin in geringem Abstand von den Führungsblöcken 24. Der Bereich des Raupenbandes 16, der beim Fahren am Stärksten unter Spannung steht, bleibt daher nahe der Mitte des Raupenbandes 16, anstatt, wie im Falle der Fig. 1, an dessen Rand zu wandern. Die Neigung des Raupenbandes 16 auf mangelnde Parallelität der Drehachsen 20 durch eine Seitwärtsdrift zu reagieren, ist daher gegenüber dem herkömmlichen Aufbau der Fig. 1 erheblich vermindert.

Wenn der Mähdrescher 10 eine Kurve fährt, bewirkt die zwischen Boden und Raupenband 16 auftretende Reibung ein zum Boden senkrechtes Drehmoment, das danach trachtet, die Führungsblöcke 24 an den beiden Laufrädern 14, 15 gegen jeweils entgegengesetzte Flanken der beiden Nuten 28 zu drücken. Da der Krümmungsradius der Umfangsflächen 27 größer ist als der des Kreises 29, führt eine solche Verdrehung zu einer erhöhten Spannung im Raupenband 16, der dieses im Laufe der weiteren Fahrt des Mähdreschers 10 dadurch ausweicht, dass das Raupenband 16 wieder der in Fig. 4 gezeigten Stellung zustrebt.

Wie aus der Betrachtung der Fig. 1 deutlich wird, ist bei einem herkömmlichen Raupenlaufwerk mit zylindrischen Laufrädern 1 die Dehnung des Raupenbandes 16 bei Nichtparallelität der Drehachsen 20 an einem Rand des Raupenbandes 16 am stärksten. Im Gegensatz dazu wandert bei dem Raupenlaufwerk 11 der Fig. 4 der Bereich der stärksten Spannung im Falle eines Ausrichtungsfehlers nur wenig zur Seite, und auch die Spannung des Raupenbandes 16 nimmt nur wenig zu. Daher kann das erfindungsgemäße Laufwerk 11 relativ große Ausrichtungsfehler der Achsen 20 tolerieren, ohne dass es zu übermäßiger Reibung der Führungsblöcke 24 an den Flanken der Nut 28 kommt. Daher kann das Raupenlaufwerk 11 mit festen, nicht justierbaren Drehachsen 20 ausgestattet sein. Dies macht das Laufwerk 11 für den Nutzer sowohl preiswert in der Anschaffung als auch, aufgrund der fortfallenden Notwendigkeit, die Laufräder zu justieren, ökonomisch im Betrieb.

Fig. 5 zeigt eine zweite Ausgestaltung des Raupenlaufwerks 11 in einem zu Fig. 4 analogen Schnitt. Die Gestalt der Laufräder 14, 15 ist dieselbe wie in Fig. 4 gezeigt, und auch die äußere Gestalt des Raupenbandes 16 ist die gleiche. Der Unterschied liegt im inneren Aufbau des Raupenbandes 16, das bei der Ausgestaltung der Fig. 5 mit zwei Gruppen von eingelegten Stahlseilen 30 beiderseits der Führungsblöcke 24 versehen ist. Die Stahlseile 30 verleihen dem Raupenband 16 eine hohe Zugfestigkeit, sodass, obwohl ein Achsausrichtungsfehler oder eine Verdrehung des Raupenbandes 16 bei Kurvenfahrt jeweils nur eine geringe Dehnung bewirken, diese Dehnung innerhalb des Laufwerks 11 Kräfte hervorruft, die groß genug sind, um das Raupenband 16 nach einer Auslenkung zuverlässig in seine in Fig. 5 gezeigte Mittelstellung zurückzuführen.

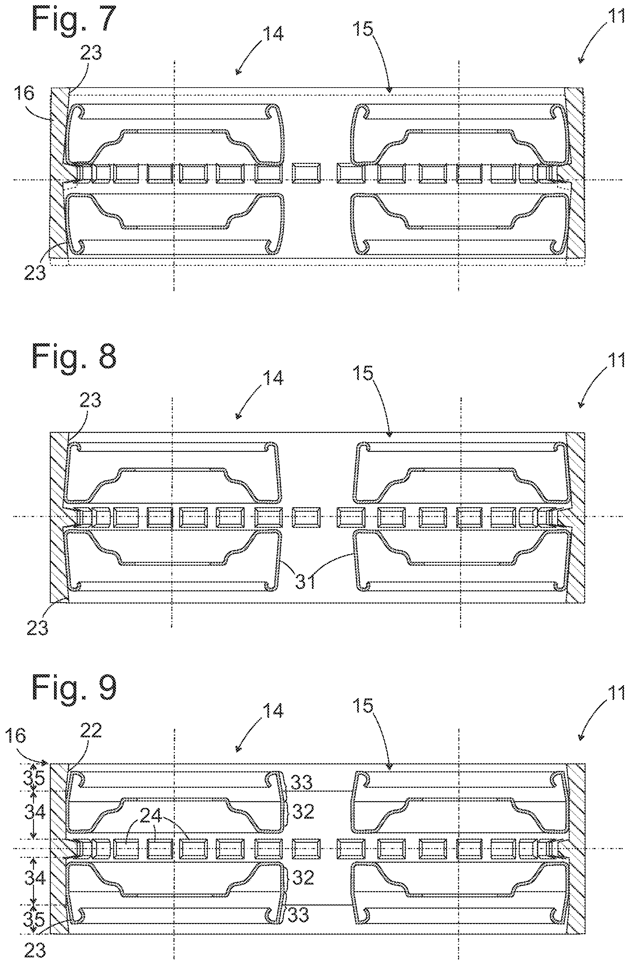

Bei der Ausgestaltung der Fig. 6 sind wiederum die gleichen Laufräder 14, 15 verwendet wie bei der Ausgestaltung der Fig. 4. Abweichend von Fig. 4 liegen jedoch an der Innenseite des Raupenbandes 16 die zwei Streifen 23 beiderseits der Führungsblöcke 24 im Querschnitt nicht auf einer Linie, sondern sie spannen einen stumpfen Winkel auf, so dass sie in den Teilen des Raupenbandes 16, die sich um die Laufräder 14, 15 schlingen, jeweils Sektoren von aufeinander zu divergierenden Kegelmänteln bilden. Dies hat zur Folge, dass, wenn wie in Fig. 7 gezeigt das Raupenband 16 in Bezug auf die Laufräder 14, 15 als Ganzes aus seiner gestrichelt dargestellten Mittellage parallel seitwärts versetzt ist, einer der beiden Streifen 23 (der untere in Fig. 7) unter starke Spannung gerät, wohingegen der gegenüberliegende Streifen 23 praktisch spannungslos wird. Dies bewirkt bei der weiteren Fahrt des Mähdreschers 10 eine Drift des Raupenbandes 16 zu seiner stärker gespannten Seite hin, wodurch das Raupenband 16 selbsttätig wieder in die dem Zustand geringster Spannung entsprechende Mittellage zurückkehrt.

Bei der in Fig. 8 gezeigten Ausgestaltung hat das Raupenband 16 die gleiche Gestalt wie in der Ausgestaltung der Figuren 6 und 7, doch bei den Laufrädern 14, 15 sind die im Querschnitt kreisbogenförmigen Umfangsflächen 27 der Figuren 4 bis 7 durch kegelstumpfförmige, im Querschnitt zu den um sie herumgeschlungenen Streifen 23 des Raupenbandes 16 parallele Umfangsflächen 31 ersetzt. Solange sich das Raupenband 16 in seiner in Fig. 8 gezeigten Mittelstellung befindet, sind beide Streifen 23 durch den Kontakt mit den Umfangsflächen 31 auf ihrer gesamten Breite gleichmäßig gespannt, es gibt daher am Raupenband 16 keine Bereiche, die einer besonders hohen, eventuell zu Materialermüdung und vorzeitigem Verschleiß führenden Spannung ausgesetzt sind. Im Fall eines Seitwärtsversatzes des Raupenbandes 16 konzentriert sich wie bei der vorigen Ausgestaltung die Spannung auf einen der zwei Streifen 23, so dass das Raupenband 16 zurück zur Mittelstellung strebt.

Bei den Ausgestaltungen der Figuren 6, 7 bzw. 8 führt grundsätzlich jede noch so geringe Auslenkung des Raupenbandes 16 aus seiner Mittelstellung zu einer Ungleichverteilung der Spannungen und infolgedessen zu einer Driftbewegung des Raupenbandes 16. Wenn diese Driftbewegung über die Mittelstellung hinausgeht, kommt es wieder zu einer Ungleichverteilung der Spannungen, und eine Driftbewegung in entgegengesetzter Richtung setzt ein. Ein ständiges Pendeln des Raupenbandes 16 um seine Mittelstellung kann aber wiederum zu Reibungsverlusten und erhöhtem Verschleiß führen. Um eine solche Situation zu vermeiden, haben bei der in Fig. 9 gezeigten vierten Ausgestaltung des Raupenlaufwerks 11 die Laufräder 14, 15 beiderseits der Nut 28 jeweils zylindrische Umfangsflächenabschnitte 32 und, nach außen an diese anschließend, kegelförmige Umfangsflächenabschnitte 33. Komplementär hierzu weist die Innenseite 22 des Raupenbandes 16 beiderseits der Führungsblöcke 24 auf einer gleichen Linie liegende Streifen 34 und, nach außen an diese angrenzend, parallel zu den kegelförmigen Abschnitten 33 der Laufräder geneigte Streifen 35 auf. Da die Streifen 34 breiter sind als die zylindrischen Umfangsflächenabschnitte 32, kann das Raupenband 16 an den Laufrädern 14, 15 in gewissem Umfang in seitlicher Richtung wandern, ohne dass Rückstellkräfte auftreten. Ein Hin- und Herschwingen des Raupenbandes 16 wird so vermieden. Bevor eine solche Seitwärtswanderung jedoch so weit geht, dass die Führungsblöcke 24 an eine der Radscheiben 26 anstoßen, gelangt einer der kegelförmigen Umfangsflächenabschnitte 33 in Kontakt mit dem ihm gegenüberliegenden schrägen Streifen 35, sodass sich im Bereich dieses Streifens 35 die Spannung des Raupenbandes 16 erhöht und eine Driftbewegung des Raupenbandes 16 zurück in die Mittelstellung auslöst.

### Bezugszeichen

- 1: Rad
- 2: Raupenband
- 3: Führungsblock
- 4: Nut
- ) 5: Achse
- 10: Mähdrescher
- 11: Raupenlaufwerk
- 12: Schneidvorsatz
- 13: Rad
- 14: Laufrad
- 15: Laufrad
- 16: Raupenband
- 17: Stützrad
- 18: Antriebsrad
- 19:
- 20: Achse
- 21: Außenseite
- 22: Innenseite
- 23: Streifen
- 24: Führungsblock
- 25: Element
- 26: Radscheibe
- 27: Umfangsfläche
- 28: Nut
- 29: Kreis
- 30: Stahlseil
- 31: Umfangsfläche
- 32: Umfangsflächenabschnitt
- 33: Umfangsflächenabschnitt
- 34: Streifen
- 35: Streifen

## Patentansprüche

1. Raupenlaufwerk (11) mit wenigstens zwei Laufrädern (14, 15) und einem endlosen Raupenband (16), das Umfangsflächen (27, 31, 32, 33) als Wirkoberflächen der Laufräder (14, 15) umschlingt, wobei eine Innenseite (22) des Raupenbandes (16) zwei im Querschnitt ebene Streifen (23) umfasst, die voneinander durch eine Reihe von nach innen vorspringenden Führungsblöcken (24) getrennt sind, und wobei Radscheiben (26) der Laufräder (14, 15) auf einer Radnabe in einem solchen Abstand voneinander montiert sind, dass zwischen besagten Umfangsflächen (27, 31, 32, 33) von zwei spiegelbildlich ausgebildeten Elementen (25) jedes Laufrades (14, 15) eine Nut (28) frei bleibt, in die die Führungsblöcke (24) mit Spiel eingreifen, **dadurch gekennzeichnet, dass** die Umfangsfläche (27; 31; 32, 33) wenigstens eines der Laufräder (14, 15) ballig ausgeführt ist.

2. Raupenlaufwerk nach Anspruch 1, **dadurch gekennzeichnet, dass** ein Bereich des Raupenbandes (16), der beim Fahren am Stärksten unter Spannung steht, nahe der Mitte des Raupenbandes (16) bleibt, anstatt an dessen Rand zu wandern.

3. Raupenlaufwerk nach einem der vorhergehenden Ansprüche, **dadurch gekennzeichnet, dass** in einer Idealstellung des Raupenbandes (16) an den Laufrädern (14, 15) die Führungsblöcke (24) mittig in die Nuten (28) eingreifen, ohne die Radscheiben (26) an deren beiden Seiten zu berühren, und die Umfangsflächen (27) die Innenseite (22) des Raupenbandes (16) nur in unmittelbarer Nachbarschaft zur Nut (28) berühren.

4. Raupenlaufwerk nach einem der vorhergehenden Ansprüche, **dadurch gekennzeichnet, dass** die ballige Umfangsfläche (27) des wenigstens einen Laufrades (14, 15) im Querschnitt entlang einer Achse (20) dieses Laufrades (14, 15) kreisbogenförmig ist.

5. Raupenlaufwerk nach Anspruch 4, **dadurch gekennzeichnet, dass** der Durchmesser des Kreisbogens wenigstens der Länge des Raupenlaufwerks (11) entspricht.

6. Raupenlaufwerk nach Anspruch 1, **dadurch gekennzeichnet, dass** das ballige Laufrad (14, 15) wenigstens zwei Kegelstümpfe (31; 33) mit einander zugewandten großen Grundflächen umfasst.

7. Raupenlaufwerk nach Anspruch 6, **dadurch gekennzeichnet, dass** das ballige Laufrad (14, 15) zwischen den zwei Kegelstümpfen (33) einen zylindrischen Abschnitt (32) aufweist.

8. Landwirtschaftliche Maschine (10), **gekennzeichnet durch** wenigstens ein Raupenlaufwerk (11) nach einem der vorhergehenden Ansprüche.

## Claims

1. A track-laying mechanism (11) comprising at least two runner wheels (14, 15) and an endless track belt (16) which passes around peripheral surfaces (27, 31, 32, 33) as active surfaces of the runner wheels (14, 15), wherein an inside (22) of the track belt (16) has two strips (23) which are flat in cross-section and which are separated from each other by a row of inwardly projecting guide blocks (24) and wherein wheel discs (26) of the runner wheels (14, 15) are mounted on a wheel hub at such a spacing from each other that between said peripheral surfaces (27, 31, 32, 33) of two elements (25) of mirror-image configuration of each runner wheel (14, 15) a groove (28) remains free, into which the guide blocks (24) engage with play, **characterised in that** the peripheral surface (27, 31, 32, 33) of at least one of the runner wheels (14, 15) is of a spherical configuration.

2. A track-laying mechanism according to claim 1 **characterised in that** a region of the track belt (16) which when travelling is most heavily stressed remains near the centre of the track belt (16) instead of moving to the edge thereof.

3. A track-laying mechanism according to one of the preceding claims **characterised in that** in an ideal position of the track belt (16) on the runner wheels (14, 15) the guide blocks (24) engage centrally into the grooves (28) without the wheel discs (26) contacting the two sides thereof and the peripheral surfaces (27) touch the inside (22) of the track belt (16) only in the immediate proximity in relation to the groove (28).

4. A track-laying mechanism according to one of the preceding claims **characterised in that** the spherical peripheral surface (27) of the at least one runner wheel (14, 15) is in the shape of a circular arc in cross-section along an axis (20) of said runner wheel (14, 15).

5. A track-laying mechanism according to claim 4 **characterised in that** the diameter of the circular arc corresponds at least to the length of the track-laying mechanism (11).

6. A track-laying mechanism according to claim 1 **characterised in that** the spherical runner wheel (14, 15) includes at least two truncated cones (31, 33) with mutually facing large base surfaces.

7. A track-laying mechanism according to claim 6 **characterised in that** the spherical runner wheel (14, 15) has a cylindrical portion (32) between the two truncated cones (33).

8. An agricultural machine (10) **characterised by** at least one track-laying mechanism (11) according to one of the preceding claims.

## Revendications

1. Train de roulement à chenilles (11) comprenant au moins deux roues de roulement (14, 15) et une chenille sans fin (16) qui entoure des surfaces périphériques (27, 31, 32, 33) faisant fonction de surfaces actives des roues de roulement (14, 15), un côté intérieur (22) de la chenille (16) comprenant deux bandes à section transversale plane (23) qui sont séparées l'une de l'autre par une rangée de blocs de guidage (24) en saillie vers l'intérieur, et des disques de roues (26) des roues de roulement (14, 15) étant montés sur un moyeu de roue avec un écartement tel qu'entre lesdites surfaces périphériques (27, 31, 32, 33) de deux éléments de conception inversée (25) de chaque roue de roulement (14, 15) subsiste une rainure (28) dans laquelle les blocs de guidage (24) s'engagent avec jeu, **caractérisé en ce que** la surface périphérique (27 ; 31 ; 32, 33) d'au moins une des roues de roulement (14, 15) est de forme bombée.

2. Train de roulement à chenilles selon la revendication 1, **caractérisé en ce qu'**une zone de la chenille (16) qui, lors de la marche, est soumise à la tension la plus forte, reste proche du centre de la chenille (16) au lieu de se déplacer vers le bord de celle-ci.

3. Train de roulement à chenilles selon une des revendications précédentes, **caractérisé en ce que**, dans une position idéale de la chenille (16) sur les roues de roulement (14, 15), les blocs de guidage (24) pénètrent dans les rainures (28) en position centrée sans toucher les disques de roues (26) au niveau des deux faces de ceux-ci, et les surfaces périphériques (27) ne touchent le côté intérieur (22) de la chenille (16) qu'au voisinage immédiat de la rainure (28).

4. Train de roulement à chenilles selon une des revendications précédentes, **caractérisé en ce que**, en coupe transversale selon un axe (20) de cette roue de roulement (14, 15), la surface périphérique bombée (27) de la au moins une roue de roulement (14, 15) est en forme d'arc de cercle.

5. Train de roulement à chenilles selon la revendication 4, **caractérisé en ce que** le diamètre de l'arc de cercle correspond au moins à la longueur du train de roulement à chenilles (11).

6. Train de roulement à chenilles selon la revendication 1, **caractérisé en ce que** la roue de roulement bombée (14, 15) comprend au moins deux troncs de cône (31 ; 33) avec de grandes surfaces de base orientées l'une vers l'autre.

7. Train de roulement à chenilles selon la revendication 6, **caractérisé en ce que**, entre les deux troncs de cône (33), la roue de roulement bombée (14, 15) comporte une portion cylindrique (32).

8. Machine agricole (10), **caractérisée par** au moins un train de roulement à chenilles (11) selon une des revendications précédentes.
